# EUROPEAN PATENT APPLICATION

(11) **EP 3 926 494 A1**
(43) Date of publication of application: **22.12.2021**
(21) Application number: 21165649.1
(22) Date of filing: 29.03.2021
(51) Int. Cl.: G06F 16/9537, G06F 16/957

(54) **DYNAMIC GENERATION OF LOCATION-SPECIFIC USER INTERFACES**

(30) Priority: 19.06.2020 US 202016906336
(71) Applicant: Shopify Inc., Ottawa, ON K2P 2L8 (CA)
(72) Inventor: Mishra, Rohit, Ottawa, Ontario K2P 2L8 (CA); Elliott, Charlie, Ottawa, Ontario K2P 2L8 (CA); Lapointe, Julien, Ottawa, Ontario K2P 2L8 (CA); Mackenzie, Alaine, Ottawa, Ontario K2P 2L8 (CA); Whitestone, Ian, Ottawa, Ontario K2P 2L8 (CA)
(74) Representative: Murgitroyd & Company

(57) **Abstract**

Systems and methods for modifying features of a user interface of an online store in a manner based on a location of a customer are provided. The preferences for the features are identified for various geographical regions. The modification may be performed in real time, in the sense that the modification is not performed until a customer from a different region attempts to access the store. When this happens, the features of the online store are modified based on preferences or trends associated with a geographical region within which the customer is located, and a revised user interface is presented to the customer. The overall effect is that the store with the new revised user interface emulates stores created by merchants native to the customer's region.

## Description

### FIELD

The application relates to user interfaces, and, more specifically, to dynamically generating online user interfaces for different geographical regions.

### BACKGROUND

Different jurisdictions may have different preferences regarding the visual appearance of user interfaces. For example, in an e-commerce context, different jurisdictions may have different preferences as to the visual appearance/layout of the user interfaces of online stores. There can be a significant upfront expense and effort associated with localizing online store user interfaces. This upfront expense and effort can act as an impediment to merchants opening stores in new jurisdictions.

### SUMMARY

Embodiments of the application provide systems and methods for modifying a user interface in manners based on a location of remote user devices.

The subject matter of the present disclosure is applicable in contexts including that of user interfaces for online stores. Considering online stores, preferences for the layout of user interfaces for online stores may be identified for various geographical regions. This can be done in a variety of manners such as by examining other online stores that have, or are expected to have, features that are appropriate to a given geographical region. Such stores may be stores that are actually local to the region of interest, and/or stores that have a significant customer base in that jurisdiction. In a case where all the online stores are part of a common e-commerce platform, there will be some constraints on how online stores are built, given that they are generated by the e-commerce platform, and this makes it easier to compare features of multiple online stores. By examining other online stores, preferences and/or patterns and/or tendencies and/or trends can be identified in relation to the layout of user interfaces of online stores servicing a given region. The preferences, patterns, tendencies, trends so identified may be used for the purpose of modifying the layout of the user interface of an online store, originally developed for a first region, yielding a version of the online store with a different user interface layout for a new region.

The user interface modification may be performed in real time, in the sense that the modification is not performed until a user device from the new region attempts to access the store. When this happens, the layout of the online store is modified based on the preferences, patterns, tendencies, trends associated with a geographical region within which a user device being used by a customer to access the online store is located, and a revised user interface is presented on the user device. The overall effect is that the store with the new revised user interface emulates stores that are native to the geographical region.

Such a system can be used to allow online stores to be quickly localized for multiple regions without the heavy resource investment that a full localization would require. The merchant can then optionally make a larger investment in a region-specific store once it is determined that the market is a viable market for that store/merchant. More generally, the approach may be used to allow merchants to reach every potential customer, even if there are only a few such potential customers in a given region.

According to one aspect of the present disclosure, there is provided a system comprising: a commerce engine configured to provide an online store, the online store having a first version of a user interface for customers to access the online store, the first version of the user interface having a first layout when rendered by user devices of a particular type; and a layout modification engine configured to generate a second version of the user interface responsive to a user device accessing the online store, the second version of the user interface having a second layout different from the first layout when rendered by user devices of the particular type; wherein the second version of the user interface is generated by modifying the first version of the user interface based on a location associated with the user device.

In some embodiments, the second layout has a different layout density from the first layout.

In some embodiments, the modifications made to the first version of the user interface to generate the second version of the user interface include at least one of: a change in layout density, wherein changing the layout density comprises using a different layout density for the second version of the user interface; a change in image size for at least one image in the first user interface, wherein changing image size for a given image in the first version of the user interface includes using a different image size for that image in the second version of the user interface; replacing at least one image in the first version of the user interface, wherein replacing a given image in the first version of the user interface includes using a different version of that image in the second version of the user interface; modifying content specific to a holiday, wherein modifying content specific to a holiday includes removing holiday specific content when generating the second version of the user interface; a change to a season-specific feature, wherein changing the season-specific feature includes replacing the season-specific feature in the second version of the user interface with a different season-specific feature corresponding to a season in the location associated with the user device; and a change to a brand specific feature, wherein changing the brand specific feature includes removing or replacing a brand specific feature in the second version of the user interface that was included in the first user interface.

In some embodiments, when the location associated with the user device is within one of a plurality of predefined regions, the second version is generated in a manner specific to the one of the plurality of predefined regions.

In some embodiments, the system further comprises: a location specific conversion setting engine configured to, for each of the plurality of predefined regions, determine region-specific preferences and/or patterns and/or tendencies and/or trends from other online stores associated with the predefined region, wherein modifying the first version of the user interface is performed based on the region-specific preferences and/or patterns and/or tendencies and/or trends associated with the one of the plurality of predefined regions.

In some embodiments, the system further comprises: a merchant user interface for selecting said plurality of predefined regions.

In some embodiments, the merchant user interface is further configured to receive a selection, for one or more regions of the plurality of regions, as to which of a plurality of features of the first user interface to modify, and to operate the layout modification engine based on the selection.

In some embodiments, the layout modification engine is further configured to include a different version of a checkout flow in the second version of the checkout flow compared to the first version of the user interface.

In some embodiments, the checkout flow for the second version of the user interface omits at least one step of the checkout flow included in the first version of the user interface.

In some embodiments, a step in the checkout flow included in the first version of the user interface for entering shipping address is replaced with a step in the checkout flow included in the second version of the user interface for selecting a pickup point.

In some embodiments, the system is further configured to determine the location associated with the user device.

In some embodiments, the particular type is one of personal computers and mobile devices.

In some embodiments, the system comprises: a processor; a memory containing instructions for execution by the processor; wherein at least one of the commerce engine or the layout modification engine are implemented with the processor and memory.

According to another aspect of the present disclosure, there is provided a processor implemented method comprising: receiving input from a user device to access an online store, the online store having a first version of a user interface for customers to access the online store, the first version of the user interface having a first layout when rendered by user devices of a particular type; in response to the input, generating a second version of the user interface responsive to a user device accessing the online store, the second version of the user interface having a second layout different from the first layout when rendered by user devices of the particular type, wherein generating the second version of the user interface comprises modifying the first version of the user interface based on a location associated with the user device; interacting with the user device using the second version of the user interface.

In some embodiments, the second layout has a different layout density from the first layout.

In some embodiments, modifying the first version of the user interface comprises at least one of: changing layout density, wherein changing the layout density comprises using a different layout density for the second version of the user interface; changing image size for at least one image in the first user interface, wherein changing image size for a given image in the first version of the user interface includes using a different image size for that image in the second version of the user interface; replacing at least one image in the first version of the user interface, wherein replacing a given image in the first version of the user interface includes using a different version of that image in the second version of the user interface; modifying content specific to a holiday, wherein modifying content specific to a holiday includes removing holiday specific content when generating the second version of the user interface; changing a season-specific feature, wherein changing the season-specific feature includes replacing the season-specific feature in the second version of the user interface with a different season-specific feature corresponding to a season in the location associated with the user device; and changing a brand specific feature, wherein changing the brand specific feature includes removing or replacing a brand specific feature in the second version of the user interface that was included in the first user interface.

In some embodiments, when the location associated with the user device is within one of a plurality of predefined regions, the second version is generated in a manner specific to the one of the plurality of predefined regions.

In some embodiments, the method further comprises: for each of the plurality of predefined regions, determining region-specific preferences and/or patterns and/or tendencies and/or trends from other online stores associated with the predefined region; wherein modifying the first version of the user interface is performed based on the region-specific preferences and/or patterns and/or tendencies and/or trends associated with the one of the plurality of predefined regions.

In some embodiments, the method further comprises: receiving a selection of at least one of said plurality of predefined regions.

In some embodiments, the method further comprises receiving a selection, for one or more regions of the plurality of regions, as to which of a plurality of features of the first user interface to modify, and to perform said modifying the first user interface based on the selection.

In some embodiments, the method further comprises including a different version of a checkout flow in the second version of the user interface compared to the first version of the user interface.

In some embodiments, the checkout flow for the second version of the user interface omits at least one step of the checkout flow included in the first version of the user interface.

In some embodiments, a step in the checkout flow included in the first version of the user interface for entering shipping address is replaced with a step in the checkout flow included in the second version of the user interface for selecting a pickup point.

In some embodiments, the method further comprises: determining the location associated with the user device.

In some embodiments, the particular type is one of personal computers and mobile devices.

### BRIEF DESCRIPTION OF THE DRAWINGS

Embodiments of the disclosure will now be described with reference to the attached drawings in which:
Figure 1 is a block diagram of a system that implements dynamic generation of location-specific user interfaces;
Figure 2 is a block diagram of a system that obtains location specific modification settings automatically;
Figures 3 and 4 are example parts of a merchant user interface for selecting a region for which location-specific layout modification is to be performed;
Figure 5 is an example of part of a merchant user interface for configuring how layout-specific modification will be performed;
Figures 6 and 7 are examples of user interfaces for a store as presented for a native region and for another region after modification;
Figure 8 is a block diagram of an e-commerce platform, according to one embodiment; and
Figure 9 is an example of a home page of a merchant, according to one embodiment.

### DETAILED DESCRIPTION

Online stores may have many features, other than language, that can be viewed as cultural or location specific. In particular, the visual appearance or layout of an online stores targeting one geographical region may vary from those intended for another region. For example, content density in Japan is typically much higher than in North America. Because of these differences, localization of a store from one region to provide a store for another region involves more than mere translation of the user interface. For example, applying Google Translate to a North American online store user interface will yield a Japanese language user interface that, to a customer in Japan, does not appear at all localized to the Japanese customer. This may deter the Japanese customer from interacting with that online store.

The performance of a merchant's native language store in that new jurisdiction may be taken as a signal of potential success in that region. However, this may not provide a realistic indication of how local buyers might react to the store as it is often expatriates or individuals with significant connections to the native language of a store that may be using the merchant's store in that native language.

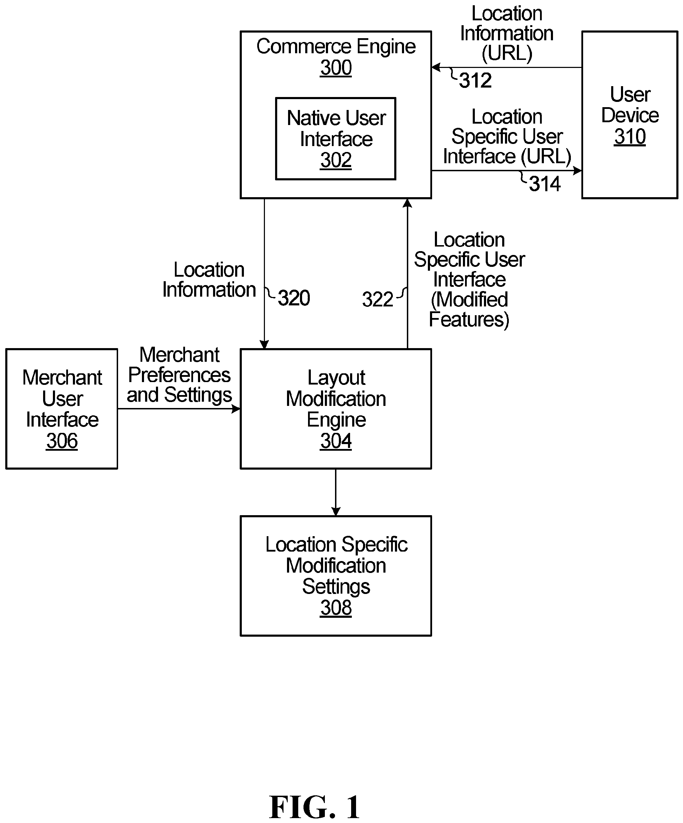

Referring now to Figure 1, shown is a block diagram of a system that implements dynamic generation of location-specific user interfaces. Shown is a commerce engine 300 that implements an online store. In some embodiments, the commerce engine 300 is part of an e-commerce platform that implements multiple stores. The commerce engine 300 provides access to the online store through a native user interface 302. The expression "native user interface" refers to a user interface that was designed and implemented for the online store. The native user interface 302 has a number of features. Many examples of such features are provided below.

The commerce engine 300 is connected to a layout modification engine 304 that is responsible for modifying the layout of the native user interface, for example by modifying features of the native user interface 302, in a location specific manner. There is a merchant user interface 306 for a merchant to configure various preferences and settings that define aspects of how the layout modification engine modifies the layout of the native user interface 302. The layout modification engine 304 modifies the layout of the native user interface 302 based on location specific modification settings 308. The location specific modification settings 308 may be pre-set, based on merchant input received via the merchant user interface, set based on an analysis of other online stores relevant to a location of interest, or may be set based on a variety of bases such as, for example, a combination including one or more of the foregoing.

Also shown is a user device 310 which would typically be connected to the commerce engine 300 over a network connection such as an Internet connection. The user device 310 may, for example, be a mobile device such as a cellular phone or tablet, or a personal computer.

In operation, a customer, using the user device 310 accesses the online store in any suitable manner, for example by entering a universal resource locator (URL), clicking a link, etc. The online store (commerce engine 300 in the example of Figure 1) determines or obtains a location associated with the user device. In the illustrated example, location information 312 associated with the user device 310 is provided to the commerce engine 300. This may occur as part of the access process. Location information is any information that the commerce engine 300 can use to determine a location associated with the user device 310. In a specific example, it is simply the IP address of the user device 310 that is used as the location information.

Alternatively, the customer may have an account with the online store, in which case address information for the customer may directly be available from stored account information, and address information can function as the location, or be used to determine the location, associated with the user device. Note that in this case, the location associated with the user device may not match the physical location of the user device.

In some embodiments, the customer is provided the option to select a preferred region for browsing, independent of the user device's physical location. For example, a customer from Japan who is physically located in Australia may want to browse using the location specific settings for Japan, rather than using the settings for Australia. In this case, the location associated with the user device for the purpose of layout modification is set to the selected region.

Once the location associated with the user device is determined (using any of the above introduced methods), this is passed to the layout modification engine 304 at 320. The layout modification engine also has access to the native user interface 302. The layout modification engine 304 produces a location specific user interface 320 based on location specific modification settings 308, and passes this back to the commerce engine 300. The commerce engine 300 then responds to the customer access by providing the location specific user interface on the user device 310. In this way it will be appreciated that location specific information is used to change the type of display that may be rendered on a device accessing the store. This real time modification of the display interface advantageously enables use of a common base template for the user interface that can then be dynamically modified based on the geographic location associated with the user engaging with the site.

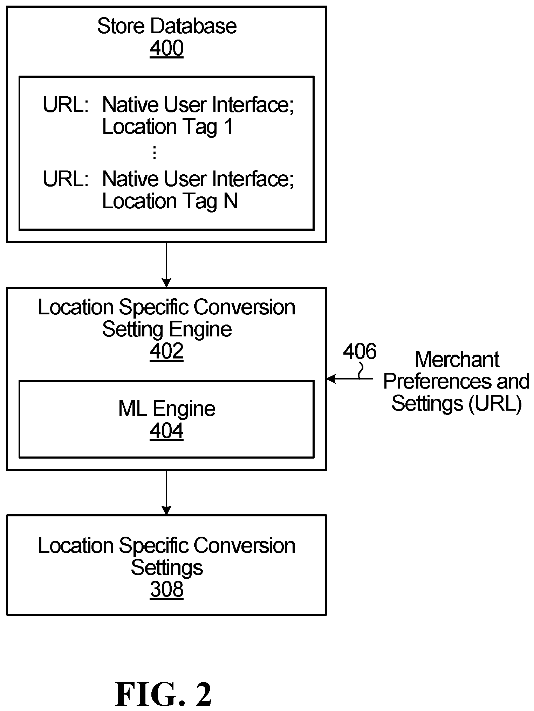

In some embodiments, the location specific conversion settings 308 are set automatically. An example of a system that achieves this is depicted in Figure 2. Shown are the location specific conversion settings 308. These are generated by a location specific conversion setting engine 402. The location specific conversion setting engine 402 has access to a store database 400 containing a database of URLs (or other identifiers) of online stores, and for each such online store, a location tag that associates the online store with a location or region. Examples of locations tags are provided below. Note that the URLs may be of online stores provided on a same e-commerce platform as the online store of interest. In some embodiments, the URLs (or other identifiers) may include online stores that are not provided on the same e-commerce platform. The location specific conversion setting engine 402 determines the location specific conversion settings 308 for a region of interest by processing the online stores listed in the store database that have location tags associated with a region of interest. Regions of interest may be pre-set, defined automatically, set based on merchant input to select or define the regions of interest, or any combination of these options.

In a specific example, the location specific conversion setting engine 402 first determines a set of stores in the store database 400 that have location tags associated with the region of interest. Then, the location specific conversion setting engine 402 analyzes user interfaces for those online stores, to identify preferences and/or patterns and/or tendencies and/or trends in how user interface layouts are most commonly implemented for the region of interest. Then, the location specific conversion settings 308 are set based on these trends. In some embodiments, the location specific conversion setting engine 402 has a machine learning (ML) engine 404 that performs the analysis and determines the location specific conversion settings 308 for a given region.

In some embodiments, the location tag is an IP address associated with the store, and an IP address can be associated with a physical location as is known. In another embodiment, the location tag for a given store is determined based on the location of customers of the store. For example, the location tag may associate the store with a region within which the majority, or a significant portion, of the store's customers are located. For example, the location tag may be determined based on the location information collected from the customers of a given store.

In some embodiments, a user interface may have different layouts when rendered on different types of user devices. For example, the layout is typically different on a mobile device compared to a personal computer. In some embodiments, the layout modification is performed such that for a particular type of user device, a different layout, when rendered by the particular type of device, is produced after modification compared to a layout rendered by the same particular type of device prior to modification. For example, the online store may have a first version of a user interface for customers to access the online store, the first version of the user interface having a first layout when rendered by user devices of a particular type, for example mobile devices. The layout modification engine generates a second version of the user interface responsive to a user device accessing the online store. The second version of the user interface has a second layout different from the first layout when rendered by user devices of the particular type, namely mobile devices in this example.

In some embodiments, where the online store is implemented as part of an e-commerce platform that implements other stores, additional data may be available that can be used for the layout modification. Some additional preprocessing is done to identify stores that will be used to identify preferences and/or patterns and/or tendencies and/or trends. In some embodiments, the degree of success of a given store (as may, for example, be assessed based on one or more metrics) is factored into the weight given to the user interface features of that store. For example, a store with a lot of traffic, or a lot of sales, product views, might be given more weight. In an e-commerce platform context, this information may be made available to the location specific conversion setting engine. In some embodiments, an ML engine can be configured to determine trends that are associated with stores that are successful as defined by one or metrics, while paying less attention to trends associated with stores that are less successful by these metrics.

In some embodiments, where the provided approach is applied to a single online store, the layout modification is based on trend data obtained by observing other local on-line stores that are not implemented as part of an e-commerce platform implementing the single online store, or alternatively may be generated by an external service. In this case, the trend data may be based, for example, on features of such on-line stores that are readily ascertainable simply by viewing the user interfaces. Underlying characteristics such as popularity, number of visits, sales conversions, sales data etc. would not be available.

In some embodiments, the location specific conversion setting engine 402 runs in the background and re-executes from time to time to make sure that the location specific conversion settings 308 are up to date and reflect current trends. For example, as a part of such a re-execution, the machine learning engine 404 may be updated by retraining and/or updating one or more machine learning models employed therein.

The location specific conversion setting engine 402 may also receive one or more merchant preferences and settings, generally indicated at 406, that configure how the location specific conversion setting engine 402 is to operate.

In some embodiments, the layout modification engine may modify layout density. Modifying the layout density involves using a different layout density for the second version of the user interface. It will be appreciated that a specific layout density defines a spacing between individual ones of the display elements that define the user interface. In this way it will be understood that the margins or padding of a particular rendered page, if changed, can be used to define the overall look and feel of a specific rendered page. For a given number of display elements for any one page that is rendered on a user interface, the spacing between those display elements defines the density of the layout- the layout density.

In some embodiments, the layout modification engine may modify object density. Modifying the object density may involve using a different density of objects for the second version of the user interface; objects may include, for example text, images, videos, 3D models, etc.

In some embodiments, the layout modification engine may modify object size for at least one object in the first user interface. Modifying image size may involve may involve changing the image size for a given image in the first version of the user interface to a different image size for the second version of the user interface.

In some embodiments, the layout modification engine may replace at least one image in the first version of the user interface. Replacing a given image in the first version of the user interface includes using a different version of that image in the second version of the user interface.

In some embodiments, the layout modification engine may modify image content. Modifying image content can involve changing one or more characteristics of an image. This might for example involve modifying background, foreground (interchanged, superposed, etc. depending on image processing tech used), colour scheme, or changing the image itself. For example, where an object such as a vase is displayed, different location specific backgrounds might be used; e.g. a Japanese living room vs. an American living room.

In some embodiments, the layout modification engine may modify object characteristic - generally any characteristic of an object may be modified. Some examples have already been given above, including object size and content.

In some embodiments, the layout modification engine may modify content specific to a holiday. An example of modifying holiday specific content involves removing holiday specific content when generating the second version of the user interface, for example, for a location that does not recognize the holiday.

In some embodiments, the layout modification engine may modify a season-specific feature. Modifying the season-specific content may involve replacing the season-specific feature in the second version of the user interface with a different version of the season-specific feature corresponding to a season in the location associated with the customer.

In some embodiments, the layout modification engine may modify a brand specific feature. Modifying a brand specific feature may involve removing or replacing a brand specific feature in the second version of the user interface that is included in the first user interface.

In some embodiments, the layout modification engine may modify user interface functionality. Modifying the functionality may involve omitting, adding, or changing the user interface functionality. A specific example of user interface functionality that may be modified in this manner is checkout flow. Modifying checkout flow may, for example involve presenting a different checkout flow for the second user interface compared to the first user interface; this may, for example involve omitting a step for the second user interface that is included in the first user interface and/or adding a step to the second user interface. A step in the first user interface of selecting a shipping option may be replaced with a step of selecting a pickup point.

Other manners of updating user interface functionality are also contemplated. By way of example, in some embodiments, content and features in the user interface and/or the presentation thereof may, additionally or alternatively, be modified by the layout modification engine. In a particular example, presentation of measurements or sizes of goods (e.g., volumes, length, width, depth, etc.) may be modified such as, for example, to change the units in which measurements are expressed (e.g., to use units of a particular measurement system such as, for example, Imperial, metric/SI, and/or US customary units). In another particular example, clothing size charts may be modified to use a different system for expressing sizes (e.g., numerical sizes like 0, 1, 2...vs. labels such as small, medium, large...). In yet another particular example, the manner of expressing a given price / cost of goods and/or services may be modified by the layout modification engine. For example, a price may be updated so as to be expressed inclusive (or exclusive) of sales taxes, duties, and/or the like. Modifications in accordance with combinations of various of these particular examples and/or, more broadly, other modifications to user interfaces by the layout modification engine are also contemplated.

In some embodiments, one or more software components may be employed and/or provided such as may be responsible for generating and/or rendering all or a portion of a given feature. More broadly, a given software component may provide/implement logic associated with a given feature such as, for example, behaviour of a given user interface component and/or interaction between one or more user interface components.

In some embodiments, in order for a feature to be modified to be a modified feature, the modified feature must be associated to a particular event that has occurred in order to be the modified feature. The particular event may be an event that is correlated with a positive outcome in relation to the modified feature. Example events include:
a sales conversion event or rate above a particular threshold.
an add-to-cart event or rate above a particular threshold.
a click-through event or rate (e.g. from a search results page or link) to the product webpage above a particular threshold.
a(n) (average) duration of time spent on the product webpage above a particular threshold.
a link activation on the product webpage that expands a partially collapsed description of the product.

As is clear from at least the last example in the list above, the event can be basically any event defined in the system, which may be correlated somehow with success of the online store.

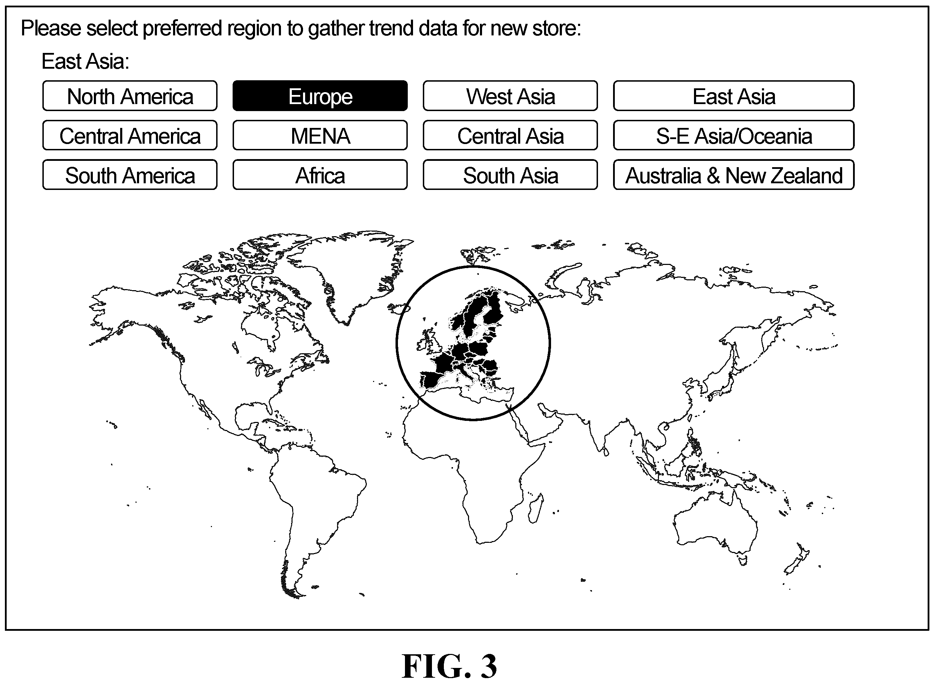

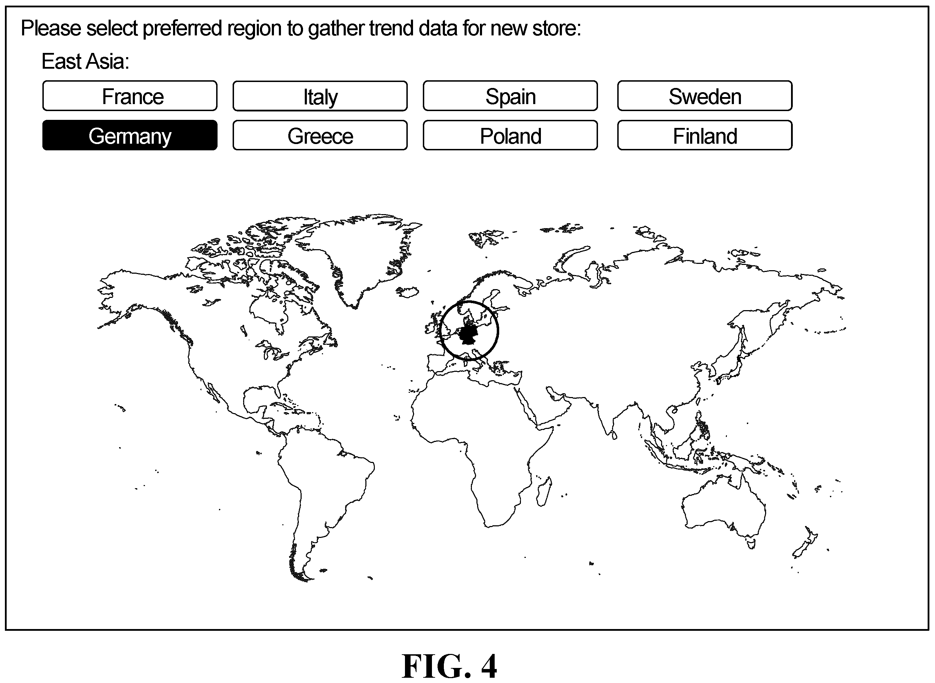

Referring now to Figure 3, shown is an example part of a merchant user interface for selecting a region for which location specific layout modification is to be performed. In this example, a map of the world is divided into regions that can be selected. In the illustrated example, the region "Europe" has been selected and is highlighted. The region might be selected with a curser, or by selecting from within the displayed list of options. This leads to the presentation of another view, depicted in Figure 4, where the region selected in Figure 3 is further broken down, and a user has selected Germany.

Figure 3 is to be understood as a very specific example of how a region can be selected. In some embodiments, layout modification is enabled by default for all of a set of predefined regions. Regions can still be selected via a merchant interface for the purpose of disabling them and/or for configuration purposes. Enabling the system for all regions by default allows a merchant to reach every buyer, even if there are only a few buyers in a given region. In addition, in some embodiments, the merchant interface allows a user to define a region on an ad hoc basis, for example using a curser and a map.

The selection of a region may be performed to enable layout modification for that region. In addition, or alternatively, the selection of a region may be performed as a precursor to configuring how the layout modification will be performed for the selected region.

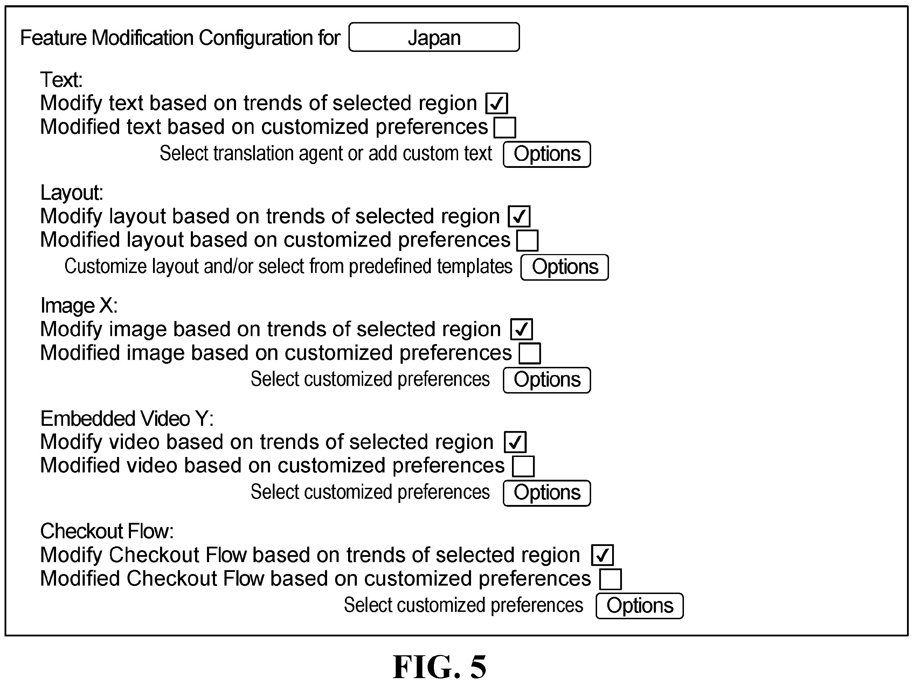

Figure 5 shows an example of part of a merchant user interface for configuring how layout modification may be performed in some embodiments. In some embodiments, this is done for a selected region, for example, a region selected using user interfaces such as depicted by way of example in Figures 3 and 4.

Figure 5 shows an example of various modifiable features that are present in the native user interface, including text, layout, an image referred to as "Image X", an embedded video referred to as "Embedded Video Y", and checkout flow. This is only one example. More generally, the list of modifiable features will vary on an implementation specific basis. For each listed feature, the merchant is given the option of selecting that the feature be modified based on trends of the selected region. These trends may be identified using one of the methods described above. In addition, the merchant has the option of selecting customized preferences. In this case, the trends for that feature, to the extent some may have been identified, are ignored, and the merchant customized preferences are applied. Once the merchant selects the customized preferences for a given feature, various options are presented to the merchant, and these may vary by feature type.

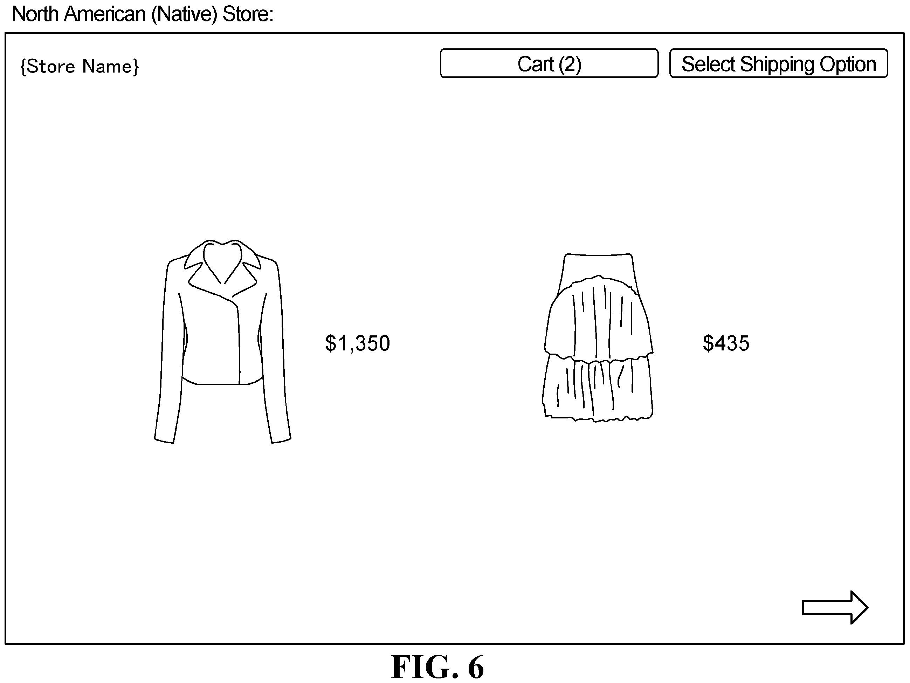

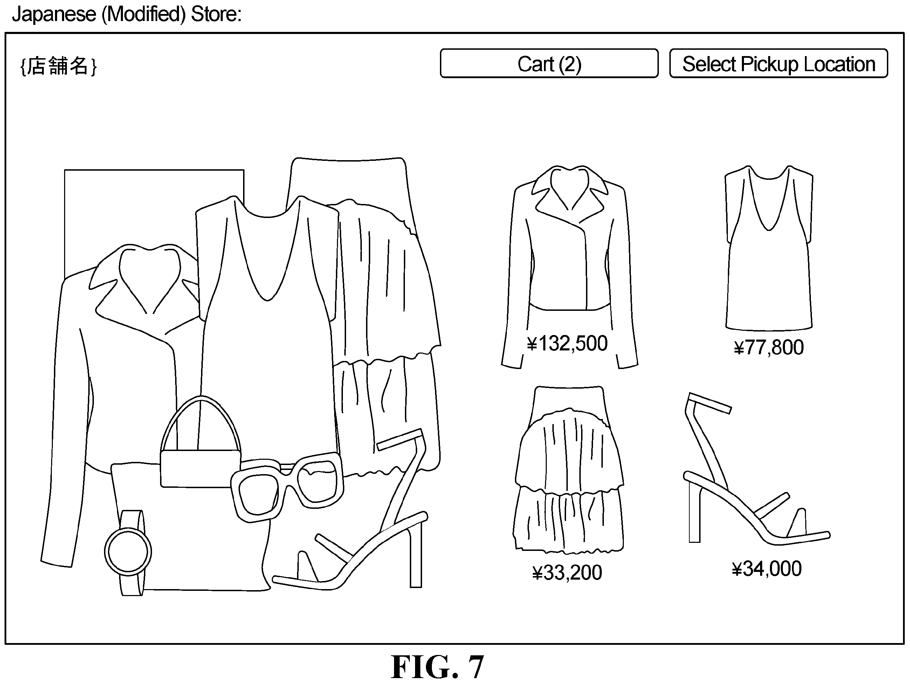

Figures 6 and 7 show two examples of a user interface for the same online store. The example of Figure 6 is for the native region, in this case, North America. The example of Figure 7 is for Japan. It can be seen that the content density is higher in the version for Japan. In addition, the checkout flow for North America includes "select shipping option", whereas the checkout flow for Japan includes "Select Pickup Location".

In some embodiments, a system for dynamic generation of location-specific user interfaces is provided that includes a processor (more generally one or more processors) and memory containing processor executable instructions. The processor and memory are configured to implement one or more components of the system. For example, one or more of the commerce engine, layout modification engine, location specific conversion setting engine, merchant user interface, may be implemented using the processor(s) and memory. Alternatively, one or more of these components may be standalone components, such as ASICs, FPGA, to name a few examples.

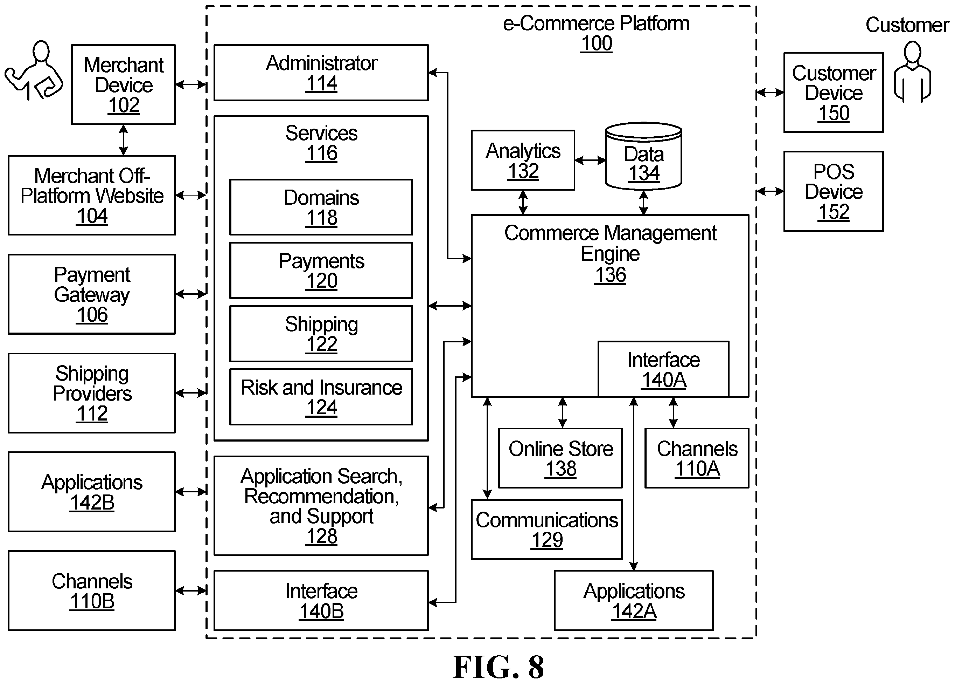

With reference to Figure 8, an embodiment e-commerce platform 100 is depicted for providing merchant products and services to customers. While the disclosure throughout contemplates using the apparatus, system, and process disclosed to purchase products and services, for simplicity the description herein will refer to products. All references to products throughout this disclosure should also be understood to be references to products and/or services, including physical products, digital content, tickets, subscriptions, services to be provided, and the like.

While the disclosure throughout contemplates that a 'merchant' and a 'customer' may be more than individuals, for simplicity the description herein may generally refer to merchants and customers as such. All references to merchants and customers throughout this disclosure should also be understood to be references to groups of individuals, companies, corporations, computing entities, and the like, and may represent for-profit or not-for-profit exchange of products. Further, while the disclosure throughout refers to 'merchants' and 'customers', and describes their roles as such, the e-commerce platform 100 should be understood to more generally support users in an e-commerce environment, and all references to merchants and customers throughout this disclosure should also be understood to be references to users, such as where a user is a merchant-user (e.g., a seller, retailer, wholesaler, or provider of products), a customer-user (e.g., a buyer, purchase agent, or user of products), a prospective user (e.g., a user browsing and not yet committed to a purchase, a user evaluating the e-commerce platform 100 for potential use in marketing and selling products, and the like), a service provider user (e.g., a shipping provider 112, a financial provider, and the like), a company or corporate user (e.g., a company representative for purchase, sales, or use of products; an enterprise user; a customer relations or customer management agent, and the like), an information technology user, a computing entity user (e.g., a computing bot for purchase, sales, or use of products), and the like.

The e-commerce platform 100 may provide a centralized system for providing merchants with online resources and facilities for managing their business. The facilities described herein may be deployed in part or in whole through a machine that executes computer software, modules, program codes, and/or instructions on one or more processors which may be part of or external to the e-commerce platform 100. Merchants may utilize the e-commerce platform 100 for managing commerce with customers, such as by implementing an e-commerce experience with customers through an online store 138, through channels 110A-B, through POS device 152 in physical locations (e.g., a physical storefront or other location such as through a kiosk, terminal, reader, printer, 3D printer, and the like), by managing their business through the e-commerce platform 100, and by interacting with customers through a communications facility 129 of the e-commerce platform 100, or any combination thereof. A merchant may utilize the e-commerce platform 100 as a sole commerce presence with customers, or in conjunction with other merchant commerce facilities, such as through a physical store (e.g., 'brick-and-mortar' retail stores), a merchant off-platform website 104 (e.g., a commerce Internet website or other internet or web property or asset supported by or on behalf of the merchant separately from the e-commerce platform), and the like. However, even these 'other' merchant commerce facilities may be incorporated into the e-commerce platform, such as where POS devices 152 in a physical store of a merchant are linked into the e-commerce platform 100, where a merchant off-platform website 104 is tied into the e-commerce platform 100, such as through 'buy buttons' that link content from the merchant off platform website 104 to the online store 138, and the like.

The online store 138 may represent a multitenant facility comprising a plurality of virtual storefronts. In embodiments, merchants may manage one or more storefronts in the online store 138, such as through a merchant device 102 (e.g., computer, laptop computer, mobile computing device, and the like), and offer products to customers through a number of different channels 110A-B (e.g., an online store 138; a physical storefront through a POS device 152; electronic marketplace, through an electronic buy button integrated into a website or social media channel such as on a social network, social media page, social media messaging system; and the like). A merchant may sell across channels 110A-B and then manage their sales through the e-commerce platform 100, where channel 110A may be provided internal to the e-commerce platform 100 or from outside the e-commerce channel 110B. A merchant may sell in their physical retail store, at pop ups, through wholesale, over the phone, and the like, and then manage their sales through the e-commerce platform 100. A merchant may employ all or any combination of these, such as maintaining a business through a physical storefront utilizing POS devices 152, maintaining a virtual storefront through the online store 138, and utilizing a communication facility 129 to leverage customer interactions and analytics 132 to improve the probability of sales. Throughout this disclosure the terms online store 138 and storefront may be used synonymously to refer to a merchant's online e-commerce offering presence through the e-commerce platform 100, where an online store 138 may refer to the multitenant collection of storefronts supported by the e-commerce platform 100 (e.g., for a plurality of merchants) or to an individual merchant's storefront (e.g., a merchant's online store).

In embodiments, a customer may interact through a customer device 150 (e.g., computer, laptop computer, mobile computing device, and the like), a POS device 152 (e.g., retail device, a kiosk, an automated checkout system, and the like), or any other commerce interface device known in the art. The e-commerce platform 100 may enable merchants to reach customers through the online store 138, through POS devices 152 in physical locations (e.g., a merchant's storefront or elsewhere), to promote commerce with customers through dialog via electronic communication facility 129, and the like, providing a system for reaching customers and facilitating merchant services for the real or virtual pathways available for reaching and interacting with customers.

In embodiments, and as described further herein, the e-commerce platform 100 may be implemented through a processing facility including a processor and a memory, the processing facility storing a set of instructions that, when executed, cause the e-commerce platform 100 to perform the e-commerce and support functions as described herein. The processing facility may be part of a server, client, network infrastructure, mobile computing platform, cloud computing platform, stationary computing platform, or other computing platform, and provide electronic connectivity and communications between and amongst the electronic components of the e-commerce platform 100, merchant devices 102, payment gateways 106, application developers, channels 110A-B, shipping providers 112, customer devices 150, point of sale devices 152, and the like. The e-commerce platform 100 may be implemented as a cloud computing service, a software as a service (SaaS), infrastructure as a service (IaaS), platform as a service (PaaS), desktop as a Service (DaaS), managed software as a service (MSaaS), mobile backend as a service (MBaaS), information technology management as a service (ITMaaS), and the like, such as in a software and delivery model in which software is licensed on a subscription basis and centrally hosted (e.g., accessed by users using a client (for example, a thin client) via a web browser or other application, accessed through by POS devices, and the like). In embodiments, elements of the e-commerce platform 100 may be implemented to operate on various platforms and operating systems, such as iOS, Android, on the web, and the like (e.g., the administrator 114 being implemented in multiple instances for a given online store for iOS, Android, and for the web, each with similar functionality).

In embodiments, the online store 138 may be served to a customer device 150 through a webpage provided by a server of the e-commerce platform 100. The server may receive a request for the webpage from a browser or other application installed on the customer device 150, where the browser (or other application) connects to the server through an IP Address, the IP address obtained by translating a domain name. In return, the server sends back the requested webpage. Webpages may be written in or include Hypertext Markup Language (HTML), template language, JavaScript, and the like, or any combination thereof. For instance, HTML is a computer language that describes static information for the webpage, such as the layout, format, and content of the webpage. Website designers and developers may use the template language to build webpages that combine static content, which is the same on multiple pages, and dynamic content, which changes from one page to the next. A template language may make it possible to re-use the static elements that define the layout of a webpage, while dynamically populating the page with data from an online store. The static elements may be written in HTML, and the dynamic elements written in the template language. The template language elements in a file may act as placeholders, such that the code in the file is compiled and sent to the customer device 150 and then the template language is replaced by data from the online store 138, such as when a theme is installed. The template and themes may consider tags, objects, and filters. The client device web browser (or other application) then renders the page accordingly.

In embodiments, online stores 138 may be served by the e-commerce platform 100 to customers, where customers can browse and purchase the various products available (e.g., add them to a cart, purchase immediately through a buy-button, and the like). Online stores 138 may be served to customers in a transparent fashion without customers necessarily being aware that it is being provided through the e-commerce platform 100 (rather than directly from the merchant). Merchants may use a merchant configurable domain name, a customizable HTML theme, and the like, to customize their online store 138. Merchants may customize the look and feel of their website through a theme system, such as where merchants can select and change the look and feel of their online store 138 by changing their theme while having the same underlying product and business data shown within the online store's product hierarchy. Themes may be further customized through a theme editor, a design interface that enables users to customize their website's design with flexibility. Themes may also be customized using theme-specific settings that change aspects, such as specific colors, fonts, and pre-built layout schemes. The online store may implement a content management system for website content. Merchants may author blog POSDADs or static pages and publish them to their online store 138, such as through blogs, articles, and the like, as well as configure navigation menus. Merchants may upload images (e.g., for products), video, content, data, and the like to the e-commerce platform 100, such as for storage by the system (e.g. as data facility 134). In embodiments, the e-commerce platform 100 may provide functions for resizing images, associating an image with a product, adding and associating text with an image, adding an image for a new product variant, protecting images, and the like.

As described herein, the e-commerce platform 100 may provide merchants with transactional facilities for products through a number of different channels 110A-B, including the online store 138, over the telephone, as well as through physical POS devices 152 as described herein. The e-commerce platform 100 may include business support services 116, an administrator 114, and the like associated with running an on-line business, such as providing a domain service 118 associated with their online store, payment services 120 for facilitating transactions with a customer, shipping services 122 for providing customer shipping options for purchased products, risk and insurance services 124 associated with product protection and liability, merchant billing, and the like. Services 116 may be provided via the e-commerce platform 100 or in association with external facilities, such as through a payment gateway 106 for payment processing, shipping providers 112 for expediting the shipment of products, and the like.

In embodiments, the e-commerce platform 100 may provide for integrated shipping services 122 (e.g., through an e-commerce platform shipping facility or through a third-party shipping carrier), such as providing merchants with real-time updates, tracking, automatic rate calculation, bulk order preparation, label printing, and the like.

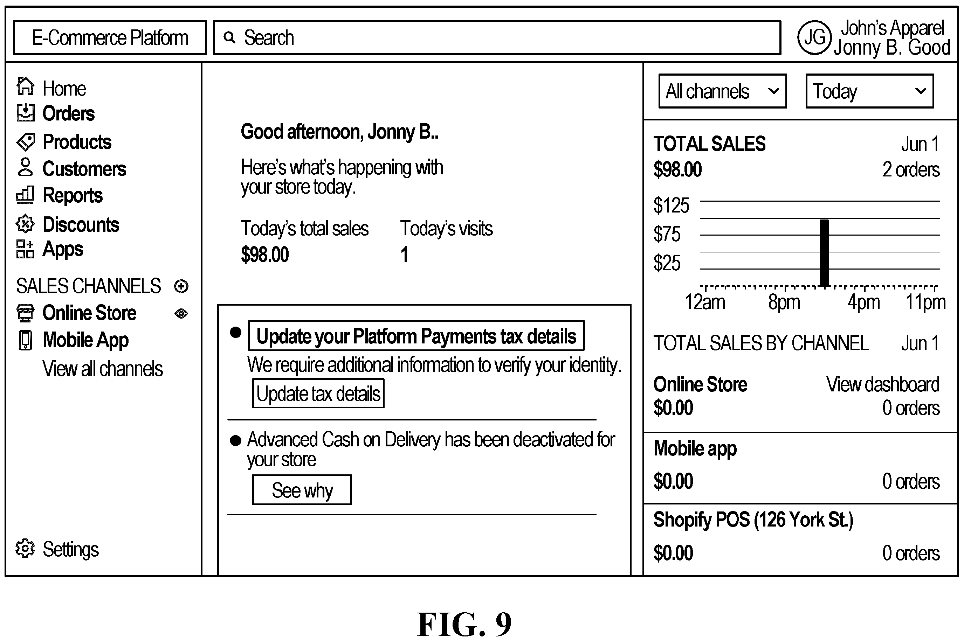

Figure 9 which will be described with further reference to Figure 8, depicts a non-limiting embodiment for a home page of an administrator 114, which may show information about daily tasks, a store's recent activity, and the next steps a merchant can take to build their business. In embodiments, a merchant may log in to administrator 114 via a merchant device 102 such as from a desktop computer or mobile device, and manage aspects of their online store 138, such as viewing the online store's 138 recent activity, updating the online store's 138 catalog, managing orders, recent visits activity, total orders activity, and the like. In embodiments, the merchant may be able to access the different sections of administrator 114 by using the sidebar, such as shown on Figure 9. Sections of the administrator 114 may include various interfaces for accessing and managing core aspects of a merchant's business, including orders, products, customers, available reports and discounts. The administrator 114 may also include interfaces for managing sales channels for a store including the online store, mobile application(s) made available to customers for accessing the store (Mobile App), POS devices, and/or a buy button. The administrator 114 may also include interfaces for managing applications (Apps) installed on the merchant's account; settings applied to a merchant's online store 138 and account. A merchant may use a search bar to find products, pages, or other information. Depending on the device 102 or software application the merchant is using, they may be enabled for different functionality through the administrator 114. For instance, if a merchant logs in to the administrator 114 from a browser, they may be able to manage all aspects of their online store 138. If the merchant logs in from their mobile device (e.g. via a mobile application), they may be able to view all or a subset of the aspects of their online store 138, such as viewing the online store's 138 recent activity, updating the online store's 138 catalog, managing orders, and the like.

More detailed information about commerce and visitors to a merchant's online store 138 may be viewed through acquisition reports or metrics, such as displaying a sales summary for the merchant's overall business, specific sales and engagement data for active sales channels, and the like. Reports may include, acquisition reports, behavior reports, customer reports, finance reports, marketing reports, sales reports, custom reports, and the like. The merchant may be able to view sales data for different channels 110A-B from different periods of time (e.g., days, weeks, months, and the like), such as by using drop-down menus. An overview dashboard may be provided for a merchant that wants a more detailed view of the store's sales and engagement data. An activity feed in the home metrics section may be provided to illustrate an overview of the activity on the merchant's account. For example, by clicking on a 'view all recent activity' dashboard button, the merchant may be able to see a longer feed of recent activity on their account. A home page may show notifications about the merchant's online store 138, such as based on account status, growth, recent customer activity, and the like. Notifications may be provided to assist a merchant with navigating through a process, such as capturing a payment, marking an order as fulfilled, archiving an order that is complete, and the like.

The e-commerce platform 100 may provide for a communications facility 129 and associated merchant interface for providing electronic communications and marketing, such as utilizing an electronic messaging aggregation facility for collecting and analyzing communication interactions between merchants, customers, merchant devices 102, customer devices 150, POS devices 152, and the like, to aggregate and analyze the communications, such as for increasing the potential for providing a sale of a product, and the like. For instance, a customer may have a question related to a product, which may produce a dialog between the customer and the merchant (or automated processor-based agent representing the merchant), where the communications facility 129 analyzes the interaction and provides analysis to the merchant on how to improve the probability for a sale.

The e-commerce platform 100 may provide a financial facility 120 for secure financial transactions with customers, such as through a secure card server environment. The e-commerce platform 100 may store credit card information, such as in payment card industry data (PCI) environments (e.g., a card server), to reconcile financials, bill merchants, perform automated clearing house (ACH) transfers between an e-commerce platform 100 financial institution account and a merchant's back account (e.g., when using capital), and the like. These systems may have Sarbanes-Oxley Act (SOX) compliance and a high level of diligence required in their development and operation. The financial facility 120 may also provide merchants with financial support, such as through the lending of capital (e.g., lending funds, cash advances, and the like) and provision of insurance. In addition, the e-commerce platform 100 may provide for a set of marketing and partner services and control the relationship between the e-commerce platform 100 and partners. They also may connect and onboard new merchants with the e-commerce platform 100. These services may enable merchant growth by making it easier for merchants to work across the e-commerce platform 100. Through these services, merchants may be provided help facilities via the e-commerce platform 100.

In embodiments, online store 138 may support a great number of independently administered storefronts and process a large volume of transactional data on a daily basis for a variety of products. Transactional data may include customer contact information, billing information, shipping information, information on products purchased, information on services rendered, and any other information associated with business through the e-commerce platform 100. In embodiments, the e-commerce platform 100 may store this data in a data facility 134. The transactional data may be processed to produce analytics 132, which in turn may be provided to merchants or third-party commerce entities, such as providing consumer trends, marketing and sales insights, recommendations for improving sales, evaluation of customer behaviors, marketing and sales modeling, trends in fraud, and the like, related to online commerce, and provided through dashboard interfaces, through reports, and the like. The e-commerce platform 100 may store information about business and merchant transactions, and the data facility 134 may have many ways of enhancing, contributing, refining, and extracting data, where over time the collected data may enable improvements to aspects of the e-commerce platform 100.

Referring again to Figure 8 in embodiments the e-commerce platform 100 may be configured with a commerce management engine 136 for content management, task automation and data management to enable support and services to the plurality of online stores 138 (e.g., related to products, inventory, customers, orders, collaboration, suppliers, reports, financials, risk and fraud, and the like), but be extensible through applications 142A-B that enable greater flexibility and custom processes required for accommodating an ever-growing variety of merchant online stores, POS devices, products, and services, where applications 142A may be provided internal to the e-commerce platform 100 or applications 142B from outside the e-commerce platform 100. In embodiments, an application 142A may be provided by the same party providing the e-commerce platform 100 or by a different party. In embodiments, an application 142B may be provided by the same party providing the e-commerce platform 100 or by a different party. The commerce management engine 136 may be configured for flexibility and scalability through portioning (e.g., sharding) of functions and data, such as by customer identifier, order identifier, online store identifier, and the like. The commerce management engine 136 may accommodate store-specific business logic and in some embodiments, may incorporate the administrator 114 and/or the online store 138.

The commerce management engine 136 includes base or "core" functions of the e-commerce platform 100, and as such, as described herein, not all functions supporting online stores 138 may be appropriate for inclusion. For instance, functions for inclusion into the commerce management engine 136 may need to exceed a core functionality threshold through which it may be determined that the function is core to a commerce experience (e.g., common to a majority of online store activity, such as across channels, administrator interfaces, merchant locations, industries, product types, and the like), is reusable across online stores 138 (e.g., functions that can be re-used/modified across core functions), limited to the context of a single online store 138 at a time (e.g., implementing an online store 'isolation principle', where code should not be able to interact with multiple online stores 138 at a time, ensuring that online stores 138 cannot access each other's data), provide a transactional workload, and the like. Maintaining control of what functions are implemented may enable the commerce management engine 136 to remain responsive, as many required features are either served directly by the commerce management engine 136 or enabled through an interface 140A-B, such as by its extension through an application programming interface (API) connection to applications 142A-B and channels 110A-B, where interfaces 140A may be provided to applications 142A and/or channels 110A inside the e-commerce platform 100 or through interfaces 140B provided to applications 142B and/or channels 110B outside the e-commerce platform 100. Generally, the e-commerce platform 100 may include interfaces 140A-B (which may be extensions, connectors, APIs, and the like) which facilitate connections to and communications with other platforms, systems, software, data sources, code and the like. Such interfaces 140A-B may be an interface 140A of the commerce management engine 136 or an interface 140B of the e-commerce platform 100 more generally. If care is not given to restricting functionality in the commerce management engine 136, responsiveness could be compromised, such as through infrastructure degradation through slow databases or non-critical backend failures, through catastrophic infrastructure failure such as with a data center going offline, through new code being deployed that takes longer to execute than expected, and the like. To prevent or mitigate these situations, the commerce management engine 136 may be configured to maintain responsiveness, such as through configuration that utilizes timeouts, queues, back-pressure to prevent degradation, and the like.

Although isolating online store data is important to maintaining data privacy between online stores 138 and merchants, there may be reasons for collecting and using cross-store data, such as for example, with an order risk assessment system or a platform payment facility, both of which require information from multiple online stores 138 to perform well. In embodiments, rather than violating the isolation principle, it may be preferred to move these components out of the commerce management engine 136 and into their own infrastructure within the e-commerce platform 100.

In embodiments, the e-commerce platform 100 may provide for a platform payment facility 120, which is another example of a component that utilizes data from the commerce management engine 136 but may be located outside so as to not violate the isolation principle. The platform payment facility 120 may allow customers interacting with online stores 138 to have their payment information stored safely by the commerce management engine 136 such that they only have to enter it once. When a customer visits a different online store 138, even if they've never been there before, the platform payment facility 120 may recall their information to enable a more rapid and correct check out. This may provide a cross-platform network effect, where the e-commerce platform 100 becomes more useful to its merchants as more merchants join, such as because there are more customers who checkout more often because of the ease of use with respect to customer purchases. To maximize the effect of this network, payment information for a given customer may be retrievable from an online store's checkout, allowing information to be made available globally across online stores 138. It would be difficult and error prone for each online store 138 to be able to connect to any other online store 138 to retrieve the payment information stored there. As a result, the platform payment facility may be implemented external to the commerce management engine 136.

For those functions that are not included within the commerce management engine 136, applications 142A-B provide a way to add features to the e-commerce platform 100. Applications 142A-B may be able to access and modify data on a merchant's online store 138, perform tasks through the administrator 114, create new flows for a merchant through a user interface (e.g., that is surfaced through extensions / API), and the like. Merchants may be enabled to discover and install applications 142A-B through application search, recommendations, and support 128. In embodiments, core products, core extension points, applications, and the administrator 114 may be developed to work together. For instance, application extension points may be built inside the administrator 114 so that core features may be extended by way of applications, which may deliver functionality to a merchant through the extension.

In embodiments, applications 142A-B may deliver functionality to a merchant through the interface 140A-B, such as where an application 142A-B is able to surface transaction data to a merchant (e.g., App: "Engine, surface my app data in mobile and web admin using the embedded app SDK"), and/or where the commerce management engine 136 is able to ask the application to perform work on demand (Engine: "App, give me a local tax calculation for this checkout").

Applications 142A-B may support online stores 138 and channels 110A-B, provide for merchant support, integrate with other services, and the like. Where the commerce management engine 136 may provide the foundation of services to the online store 138, the applications 142A-B may provide a way for merchants to satisfy specific and sometimes unique needs. Different merchants will have different needs, and so may benefit from different applications 142A-B. Applications 142A-B may be better discovered through the e-commerce platform 100 through development of an application taxonomy (categories) that enable applications to be tagged according to a type of function it performs for a merchant; through application data services that support searching, ranking, and recommendation models; through application discovery interfaces such as an application store, home information cards, an application settings page; and the like.

Applications 142A-B may be connected to the commerce management engine 136 through an interface 140A-B, such as utilizing APIs to expose the functionality and data available through and within the commerce management engine 136 to the functionality of applications (e.g., through REST, GraphQL, and the like). For instance, the e-commerce platform 100 may provide API interfaces 140A-B to merchant and partner-facing products and services, such as including application extensions, process flow services, developer-facing resources, and the like. With customers more frequently using mobile devices for shopping, applications 142A-B related to mobile use may benefit from more extensive use of APIs to support the related growing commerce traffic. The flexibility offered through use of applications and APIs (e.g., as offered for application development) enable the e-commerce platform 100 to better accommodate new and unique needs of merchants (and internal developers through internal APIs) without requiring constant change to the commerce management engine 136, thus providing merchants what they need when they need it. For instance, shipping services 122 may be integrated with the commerce management engine 136 through a shipping or carrier service API, thus enabling the e-commerce platform 100 to provide shipping service functionality without directly impacting code running in the commerce management engine 136.

Many merchant problems may be solved by letting partners improve and extend merchant workflows through application development, such as problems associated with back-office operations (merchant-facing applications 142A-B) and in the online store 138 (customer-facing applications 142A-B). As a part of doing business, many merchants will use mobile and web related applications on a daily basis for back-office tasks (e.g., merchandising, inventory, discounts, fulfillment, and the like) and online store tasks (e.g., applications related to their online shop, for flash-sales, new product offerings, and the like), where applications 142A-B, through extension / API 140A-B, help make products easy to view and purchase in a fast growing marketplace. In embodiments, partners, application developers, internal applications facilities, and the like, may be provided with a software development kit (SDK), such as through creating a frame within the administrator 114 that sandboxes an application interface. In embodiments, the administrator 114 may not have control over nor be aware of what happens within the frame. The SDK may be used in conjunction with a user interface kit to produce interfaces that mimic the look and feel of the e-commerce platform 100, such as acting as an extension of the commerce management engine 136.

Applications 142A-B that utilize APIs may pull data on demand, but often they also need to have data pushed when updates occur. Update events may be implemented in a subscription model, such as for example, customer creation, product changes, or order cancelation. Update events may provide merchants with needed updates with respect to a changed state of the commerce management engine 136, such as for synchronizing a local database, notifying an external integration partner, and the like. Update events may enable this functionality without having to poll the commerce management engine 136 all the time to check for updates, such as through an update event subscription. In embodiments, when a change related to an update event subscription occurs, the commerce management engine 136 may POSDAD a request, such as to a predefined callback URL. The body of this request may contain a new state of the object and a description of the action or event. Update event subscriptions may be created manually, in the administrator facility 114, or automatically (e.g., via the API 140A-B). In embodiments, update events may be queued and processed asynchronously from a state change that triggered them, which may produce an update event notification that is not distributed in real-time.

In embodiments, the e-commerce platform 100 may provide application search, recommendation and support 128. Application search, recommendation and support 128 may include developer products and tools to aid in the development of applications, an application dashboard (e.g., to provide developers with a development interface, to administrators for management of applications, to merchants for customization of applications, and the like), facilities for installing and providing permissions with respect to providing access to an application 142A-B (e.g., for public access, such as where criteria must be met before being installed, or for private use by a merchant), application searching to make it easy for a merchant to search for applications 142A-B that satisfy a need for their online store 138, application recommendations to provide merchants with suggestions on how they can improve the user experience through their online store 138, a description of core application capabilities within the commerce management engine 136, and the like. These support facilities may be utilized by application development performed by any entity, including the merchant developing their own application 142A-B, a third-party developer developing an application 142A-B (e.g., contracted by a merchant, developed on their own to offer to the public, contracted for use in association with the e-commerce platform 100, and the like), or an application 142A or 142B being developed by internal personal resources associated with the e-commerce platform 100. In embodiments, applications 142A-B may be assigned an application identifier (ID), such as for linking to an application (e.g., through an API), searching for an application, making application recommendations, and the like.

The commerce management engine 136 may include base functions of the e-commerce platform 100 and expose these functions through APIs 140A-B to applications 142A-B. The APIs 140A-B may enable different types of applications built through application development. Applications 142A-B may be capable of satisfying a great variety of needs for merchants but may be grouped roughly into three categories: customer-facing applications, merchant-facing applications, integration applications, and the like. Customer-facing applications 142A-B may include online store 138 or channels 110A-B that are places where merchants can list products and have them purchased (e.g., the online store, applications for flash sales (e.g., merchant products or from opportunistic sales opportunities from third-party sources), a mobile store application, a social media channel, an application for providing wholesale purchasing, and the like). Merchant-facing applications 142A-B may include applications that allow the merchant to administer their online store 138 (e.g., through applications related to the web or website or to mobile devices), run their business (e.g., through applications related to POS devices), to grow their business (e.g., through applications related to shipping (e.g., drop shipping), use of automated agents, use of process flow development and improvements), and the like. Integration applications may include applications that provide useful integrations that participate in the running of a business, such as shipping providers 112 and payment gateways.

In embodiments, an application developer may use an application proxy to fetch data from an outside location and display it on the page of an online store 138. Content on these proxy pages may be dynamic, capable of being updated, and the like. Application proxies may be useful for displaying image galleries, statistics, custom forms, and other kinds of dynamic content. The core-application structure of the e-commerce platform 100 may allow for an increasing number of merchant experiences to be built in applications 142A-B so that the commerce management engine 136 can remain focused on the more commonly utilized business logic of commerce.

The e-commerce platform 100 provides an online shopping experience through a curated system architecture that enables merchants to connect with customers in a flexible and transparent manner. A typical customer experience may be better understood through an embodiment example purchase workflow, where the customer browses the merchant's products on a channel 110A-B, adds what they intend to buy to their cart, proceeds to checkout, and pays for the content of their cart resulting in the creation of an order for the merchant. The merchant may then review and fulfill (or cancel) the order. The product is then delivered to the customer. If the customer is not satisfied, they might return the products to the merchant.

In an example embodiment, a customer may browse a merchant's products on a channel 110A-B. A channel 110A-B is a place where customers can view and buy products. In embodiments, channels 110A-B may be modeled as applications 142A-B (a possible exception being the online store 138, which is integrated within the commence management engine 136). A merchandising component may allow merchants to describe what they want to sell and where they sell it. The association between a product and a channel may be modeled as a product publication and accessed by channel applications, such as via a product listing API. A product may have many options, like size and color, and many variants that expand the available options into specific combinations of all the options, like the variant that is extra-small and green, or the variant that is size large and blue. Products may have at least one variant (e.g., a "default variant" is created for a product without any options). To facilitate browsing and management, products may be grouped into collections, provided product identifiers (e.g., stock keeping unit (SKU)) and the like. Collections of products may be built by either manually categorizing products into one (e.g., a custom collection), by building rulesets for automatic classification (e.g., a smart collection), and the like. Products may be viewed as 2D images, 3D images, rotating view images, through a virtual or augmented reality interface, and the like.

In embodiments, the customer may add what they intend to buy to their cart (in an alternate embodiment, a product may be purchased directly, such as through a buy button as described herein). Customers may add product variants to their shopping cart. The shopping cart model may be channel specific. The online store 138 cart may be composed of multiple cart line items, where each cart line item tracks the quantity for a product variant. Merchants may use cart scripts to offer special promotions to customers based on the content of their cart. Since adding a product to a cart does not imply any commitment from the customer or the merchant, and the expected lifespan of a cart may be in the order of minutes (not days), carts may be persisted to an ephemeral data store.

The customer then proceeds to checkout. A checkout component may implement a web checkout as a customer-facing order creation process. A checkout API may be provided as a computer-facing order creation process used by some channel applications to create orders on behalf of customers (e.g., for point of sale). Checkouts may be created from a cart and record a customer's information such as email address, billing, and shipping details. On checkout, the merchant commits to pricing. If the customer inputs their contact information but does not proceed to payment, the e-commerce platform 100 may provide an opportunity to re-engage the customer (e.g., in an abandoned checkout feature). For those reasons, checkouts can have much longer lifespans than carts (hours or even days) and are therefore persisted. Checkouts may calculate taxes and shipping costs based on the customer's shipping address. Checkout may delegate the calculation of taxes to a tax component and the calculation of shipping costs to a delivery component. A pricing component may enable merchants to create discount codes (e.g., 'secret' strings that when entered on the checkout apply new prices to the items in the checkout). Discounts may be used by merchants to attract customers and assess the performance of marketing campaigns. Discounts and other custom price systems may be implemented on top of the same platform piece, such as through price rules (e.g., a set of prerequisites that when met imply a set of entitlements). For instance, prerequisites may be items such as "the order subtotal is greater than $100" or "the shipping cost is under $10", and entitlements may be items such as "a 20% discount on the whole order" or "$10 off products X, Y, and Z".

Customers then pay for the content of their cart resulting in the creation of an order for the merchant. Channels 110A-B may use the commerce management engine 136 to move money, currency or a store of value (such as dollars or a cryptocurrency) to and from customers and merchants. Communication with the various payment providers (e.g., online payment systems, mobile payment systems, digital wallet, credit card gateways, and the like) may be implemented within a payment processing component. The actual interactions with the payment gateways 106 may be provided through a card server environment. In embodiments, the payment gateway 106 may accept international payment, such as integrating with leading international credit card processors. The card server environment may include a card server application, card sink, hosted fields, and the like. This environment may act as the secure gatekeeper of the sensitive credit card information. In embodiments, most of the process may be orchestrated by a payment processing job. The commerce management engine 136 may support many other payment methods, such as through an offsite payment gateway 106 (e.g., where the customer is redirected to another website), manually (e.g., cash), online payment methods (e.g., online payment systems, mobile payment systems, digital wallet, credit card gateways, and the like), gift cards, and the like. At the end of the checkout process, an order is created. An order is a contract of sale between the merchant and the customer where the merchant agrees to provide the goods and services listed on the orders (e.g., order line items, shipping line items, and the like) and the customer agrees to provide payment (including taxes). This process may be modeled in a sales component. Channels 110A-B that do not rely on commerce management engine 136 checkouts may use an order API to create orders. Once an order is created, an order confirmation notification may be sent to the customer and an order placed notification sent to the merchant via a notification component. Inventory may be reserved when a payment processing job starts to avoid over-selling (e.g., merchants may control this behavior from the inventory policy of each variant). Inventory reservation may have a short time span (minutes) and may need to be very fast and scalable to support flash sales (e.g., a discount or promotion offered for a short time, such as targeting impulse buying). The reservation is released if the payment fails. When the payment succeeds, and an order is created, the reservation is converted into a long-term inventory commitment allocated to a specific location. An inventory component may record where variants are stocked, and tracks quantities for variants that have inventory tracking enabled. It may decouple product variants (a customer facing concept representing the template of a product listing) from inventory items (a merchant facing concept that represent an item whose quantity and location is managed). An inventory level component may keep track of quantities that are available for sale, committed to an order or incoming from an inventory transfer component (e.g., from a vendor).

The merchant may then review and fulfill (or cancel) the order. A review component may implement a business process merchant's use to ensure orders are suitable for fulfillment before actually fulfilling them. Orders may be fraudulent, require verification (e.g., ID checking), have a payment method which requires the merchant to wait to make sure they will receive their funds, and the like. Risks and recommendations may be persisted in an order risk model. Order risks may be generated from a fraud detection tool, submitted by a third-party through an order risk API, and the like. Before proceeding to fulfillment, the merchant may need to capture the payment information (e.g., credit card information) or wait to receive it (e.g., via a bank transfer, check, and the like) and mark the order as paid. The merchant may now prepare the products for delivery. In embodiments, this business process may be implemented by a fulfillment component. The fulfillment component may group the line items of the order into a logical fulfillment unit of work based on an inventory location and fulfillment service. The merchant may review, adjust the unit of work, and trigger the relevant fulfillment services, such as through a manual fulfillment service (e.g., at merchant managed locations) used when the merchant picks and packs the products in a box, purchase a shipping label and input its tracking number, or just mark the item as fulfilled. A custom fulfillment service may send an email (e.g., a location that doesn't provide an API connection). An API fulfillment service may trigger a third party, where the third-party application creates a fulfillment record. A legacy fulfillment service may trigger a custom API call from the commerce management engine 136 to a third party (e.g., fulfillment by Amazon). A gift card fulfillment service may provision (e.g., generating a number) and activate a gift card. Merchants may use an order printer application to print packing slips. The fulfillment process may be executed when the items are packed in the box and ready for shipping, shipped, tracked, delivered, verified as received by the customer, and the like.

If the customer is not satisfied, they may be able to return the product(s) to the merchant. The business process merchants may go through to "un-sell" an item may be implemented by a return component. Returns may consist of a variety of different actions, such as a restock, where the product that was sold actually comes back into the business and is sellable again; a refund, where the money that was collected from the customer is partially or fully returned; an accounting adjustment noting how much money was refunded (e.g., including if there was any restocking fees, or goods that weren't returned and remain in the customer's hands); and the like. A return may represent a change to the contract of sale (e.g., the order), and where the e-commerce platform 100 may make the merchant aware of compliance issues with respect to legal obligations (e.g., with respect to taxes). In embodiments, the e-commerce platform 100 may enable merchants to keep track of changes to the contract of sales over time, such as implemented through a sales model component (e.g., an append-only date-based ledger that records sale-related events that happened to an item).

The e-commerce platform 100 may be providing sales channels for multiple merchants, for their respective customers, and for varying types of merchandise. Payment gateways 106 are provided by the e-commerce platform or by external parties to process transactions in an e-commerce environment.

The E-commerce platform of Figure 6 can be used to implement embodiments of the disclosure. Specifically, the layout modification methods and systems described herein may be implemented within the depicted e-commerce platform.

Numerous modifications and variations of the present disclosure are possible in light of the above teachings. It is therefore to be understood that within the scope of the appended claims, the disclosure may be practiced otherwise than as specifically described herein.

## Claims

1. A processor implemented method comprising:
receiving input from a user device to access an online store, the online store having a first version of a user interface for customers to access the online store, the first version of the user interface having a first layout of display elements when rendered by user devices of a particular type;
in response to the input, generating a second version of the user interface responsive to a user device accessing the online store, the second version of the user interface having a second layout of the display elements, the second layout being different from the first layout when rendered by user devices of the particular type, wherein generating the second version of the user interface comprises modifying the first version of the user interface based on a location associated with the user device;
interacting with the user device using the second version of the user interface.

2. The method of claim 1 wherein generating the second version of the user interface comprises modifying the first version of the user interface by at least one of:
changing layout density, wherein changing the layout density comprises using a different layout density for the second version of the user interface, the layout density comprising a set of values defining a spacing between individual ones of the display elements;
changing image size for at least one image in the first version, wherein changing image size for a given image in the first version of the user interface includes using a different image size for that image in the second version of the user interface;
replacing at least one image in the first version of the user interface, wherein replacing a given image in the first version of the user interface includes using a different version of that image in the second version of the user interface;
modifying content specific to a holiday, wherein modifying content specific to a holiday includes removing holiday specific content when generating the second version of the user interface;
changing a season-specific feature, wherein changing the season-specific feature includes replacing the season-specific feature in the second version of the user interface with a different season-specific feature corresponding to a season in the location associated with the user device; and
changing a brand specific feature, wherein changing the brand specific feature includes removing or replacing a brand specific feature in the second version of the user interface that was included in the first user interface.

3. The method of claim 1 or 2, wherein when the location associated with the user device is within one of a plurality of predefined regions, the second version is generated in a manner specific to the one of the plurality of predefined regions.

4. The method of claim 3 further comprising:
for each of the plurality of predefined regions, determining region-specific preferences and/or patterns and/or tendencies and/or trends from other online stores associated with the predefined region;
wherein modifying the first version of the user interface is performed based on the region-specific preferences and/or patterns and/or tendencies and/or trends associated with the one of the plurality of predefined regions.

5. The method of claim 3 or 4 further comprising:
receiving a selection of at least one of said plurality of predefined regions.

6. The method of claim 5 further comprising receiving a selection, for one or more regions of the plurality of regions, as to which of a plurality of features of the first user interface to modify, and to perform said modifying the first user interface based on the selection.

7. The method of any preceding claim further comprising including a different version of a checkout flow in the second version of the user interface compared to the first version of the user interface.

8. The method of claim 7 wherein the checkout flow for the second version of the user interface omits at least one step of the checkout flow included in the first version of the user interface.

9. The method of claim 8 wherein a step in the checkout flow included in the first version of the user interface for entering shipping address is replaced with a step in the checkout flow included in the second version of the user interface for selecting a pickup point.

10. The method of any preceding claim further comprising:
determining the location associated with the user device.

11. The method of claim 10 wherein the determining the location is effected by doing an IP look up of an address associated with the user device.

12. The method of any preceding claim wherein the particular type is one of personal computers and mobile devices.

13. A system comprising:
a processor;
a memory containing instructions which when executed on the processor are configured to carry out the method of any preceding claim.

14. A computer program which when executed on a processor of a server is configured to carry out the method of any one of claims 1 to 12.
